# EUROPEAN PATENT APPLICATION

(11) **EP 3 547 699 A1**
(43) Date of publication of application: **02.10.2019**
(21) Application number: 18877582.9
(22) Date of filing: 12.11.2018
(51) Int. Cl.: H04N 21/472, H04N 21/4722, H04N 21/482

(54) **DISPLAY DEVICE AND CONTROL METHOD THEREOF**

(30) Priority: 15.11.2017 KR 20170152404
(71) Applicant: Samsung Electronics Co., Ltd., Suwon-si, Gyeonggi-do 16677 (KR)
(72) Inventor: SEO, Yoo Jin, Suwon-si Gyeonggi-do 16677 (KR); JANG, Jeong Rok, Suwon-si Gyeonggi-do 16677 (KR); LEE, Jae Hwang, Suwon-si Gyeonggi-do 16677 (KR)
(74) Representative: Appleyard Lees IP LLP
(86) International application number: PCT/KR2018/013740
(87) International publication number: WO 2019/098624

(57) **Abstract**

Disclosed is a display apparatus including: a display; a signal receiver; a user input receiver; a communicator; and a processor configured to: process an image signal received through the signal receiver and control the display to display an image, with a user input being received through the user input receiver while displaying the image, send image information including at least a part of the image and user input information on the user input to an external apparatus through communicator, and control the display to display related information which is based on the image information and the user input information and is received from the external apparatus.

According to this, it is possible to provide the related information even on the image for which the related information has not been made in a data base in advance.

## Description

### [TECHNICAL FIELD]

The disclosure relates to a display apparatus and a control method thereof, and more particularly to the display apparatus and the control method thereof providing related information on an image.

### [BACKGROUND ART]

There has been a need of a user of a display apparatus to be provided with related information on an image which is displayed in a display apparatus. For example, a user who is watching a TV wants to know what or where a product, a place, a song, etc. that is displayed or played on a screen is while watching the TV. There has been a service which provides the related information to satisfy the need.

To provide the related information, a way of providing data related to the image in a form of a data base or in a form of the data which is included in the image has been used by a creator or a provider of the image.

However, it is not possible to provide the service for an image of which the data base has not been made in advance.

### [DISCLOSURE]

### [TECHNICAL PROBLEM]

Accordingly, an object of the disclosure is to provide a display apparatus and a control method thereof providing related information even on an image of which the data base has not been made in advance.

### [TECHNICAL SOLUTION]

According to an embodiment of the disclosure is provided a display apparatus including: a display; a signal receiver; a user input receiver; a communicator; and a processor configured to: process an image signal received through the signal receiver and control the display to display an image, with a user input being received through the user input receiver while displaying the image, send image information including at least a part of the image and user input information on the user input to an external apparatus through the communicator, and control the display to display related information which is based on the image information and the user input information and is received from the external apparatus. According to this, it is possible to provide the related information even on the image for which the related information has not been made in a data base in advance.

The processor may be further configured to send to the external apparatus additional information which includes at least one of personal information on a user, content information on a content of the image or circumstance information on watching environment. According to this, it is possible to provide the related information which is appropriate to the intention of the user.

The signal receiver may further receive an audio signal, and the image information may include at least a part of an audio which is obtained by processing the audio signal.

The display apparatus may further include a storage, wherein the processor is further configured to: store in the storage first related information which is based on a first user input and is received from the external apparatus, and with a second user input being received, control the display to display the stored first related information. According to this, it is possible to provide the related information in various ways.

According to another embodiment of the disclosure is provided a server including: a communicator; and a processor configured to: receive image information and user input information from an external apparatus, identify a search object in the image information based on the user input information, and collect related information on the search object and send the related information to the external apparatus. According to this, it is possible to provide the related information even on the image for which the related information has not been made in a data base in advance.

The processor may be further configured to: obtain a keyword from the user input information, and identify the search object corresponding to the keyword in the image information.

The processor may be further configured to: receive additional information which includes at least one of personal information on a user, content information on a content of an image or circumstance information on watching environment, and identify the search object in the image information based on the user input information and the additional information. The processor may be further configured to collect the related information on the search object based on the additional information. According to this, it is possible to provide the related information which is appropriate to the intention of the user.

The processor may be further configured to, with a user input to set an automatic recommendation mode being received, identify the search object in the image information based on a history of providing the related information to a user. According to this, it is possible to automatically provide the related information based on the history of providing the related information to the user.

The processor may be further configured to, with a user input to request the related information on a period of a video being received, identify the search object in the image information corresponding to the period. According to this, even with a single user input for a period of a video, it is possible to continuously the related information in a same type, thereby enhancing user convenience.

According to another embodiment of the disclosure is provided a display apparatus including: a display; a signal receiver; a user input receiver; and a processor configured to: process an image signal received through the signal receiver and control the display to display an image, with a user input being received through the user input receiver while displaying the image, identify a search object in image information including at least a part of the image based on the user input information, collect related information on the search object, and control the display to display the related information.

According to another embodiment of the disclosure is provided a method of controlling a display apparatus, the method including: receiving an image signal; processing the received image signal and displaying an image; with a user input being received while displaying the image, sending image information including at least a part of the image and user input information on the user input to an external apparatus; and displaying related information which is based on the image information and the user input information and is received from the external apparatus.

The sending may include further sending to the external apparatus additional information which includes at least one of personal information on a user, content information on a content of the image or circumstance information on watching environment.

The receiving may include further receiving an audio signal, and the image information may include at least a part of an audio which is obtained by processing the audio signal.

The displaying may include: storing first related information which is based on a first user input and is received from the external apparatus, and with a second user input being received, displaying the stored first related information.

According to another embodiment of the disclosure is provided a method of controlling a server, the method including: receiving image information and user input information from an external apparatus, identifying a search object in the image information based on the user input information, and collecting related information on the search object and sending the related information to the external apparatus.

The identifying may include obtaining a keyword from the user input information, and identifying the search object corresponding to the keyword in the image information.

The receiving may include further receiving additional information which includes at least one of personal information on a user, content information on a content of an image or circumstance information on watching environment, and the identifying may include identifying the search object in the image information based on the user input information and the additional information. Alternatively, the receiving may include further receiving the additional information, and the sending may include collecting the related information on the search object based on the additional information and sending the related information to the external apparatus.

According to another embodiment of the disclosure is provided a method of controlling a display apparatus, the method including: receiving an image signal; processing an image signal and displaying an image; with a user input being received while displaying the image, identifying a search object in image information based on the user input information; collecting related information on the search object; and displaying the related information.

According to this, it is possible to provide the related information even on the image for which the related information has not been made in a data base in advance.

According to another embodiment of the disclosure is provided a computer program which is stored in a computer-readable recording medium, the computer program comprising instructions to execute the method of controlling the display apparatus.

The computer program may be stored in the medium which is provided in a server and be downloaded in the display apparatus through a network.

### [ADVANTAGEOUS EFFECTS]

As described above, according to the disclosure, it is possible to provide a display apparatus and a control method thereof providing related information even on an image of which the data base has not been made in advance.

Further, according to the disclosure, it is possible to provide a display apparatus and a control method thereof providing related information which properly corresponds to an intention of a user.

### [DESCRIPTION OF DRAWINGS]

FIG. 1 a system of a display apparatus and a server according to an embodiment of the disclosure.
FIG. 2 illustrates a configuration of the display apparatus and the server according to an embodiment of the disclosure.
FIG. 3 illustrates a control method of the display apparatus according to an embodiment of the disclosure.
FIG. 4 illustrates a control method of the server according to an embodiment of the disclosure.
FIG. 5 illustrates an example of operations of the display apparatus and the server according to a first embodiment of the disclosure.
FIG. 6 illustrates an example of operations of the display apparatus and the server according to a second embodiment of the disclosure.
FIG. 7 illustrates an example of operations of the display apparatus and the server according to a third embodiment of the disclosure.
FIG. 8 illustrates an example of operations of the display apparatus and the server according to a fourth embodiment of the disclosure.
FIG. 9 illustrates an example of operations of the display apparatus and the server according to a fifth embodiment of the disclosure.
FIG. 10 illustrates an example of operations of the display apparatus and the server according to a sixth embodiment of the disclosure.
FIG. 11 illustrates an example of operations of the display apparatus and the server according to a seventh embodiment of the disclosure.

### [BEST MODE]

Below, embodiments of the disclosure to actualize the foregoing object in detail will be described in detail with reference to accompanying drawings. However, the configurations and functions illustrated in the following exemplary embodiments are not construed as limiting the present inventive concept and the key configurations and functions. In the following descriptions, details about publicly known functions or features will be omitted if it is determined that they cloud the gist of the present inventive concept.

In the following exemplary embodiments, terms 'first', 'second', etc. are only used to distinguish one element from another, and singular forms are intended to include plural forms unless otherwise mentioned contextually. In the following exemplary embodiments, it will be understood that terms 'comprise', 'include', 'have', etc. do not preclude the presence or addition of one or more other features, numbers, steps, operations, elements, components or combination thereof. In addition, a 'module' or a 'portion' may perform at least one function or operation, be achieved by hardware, software or combination of hardware and software, and be actualized by at least one processor as integrated into at least one module.

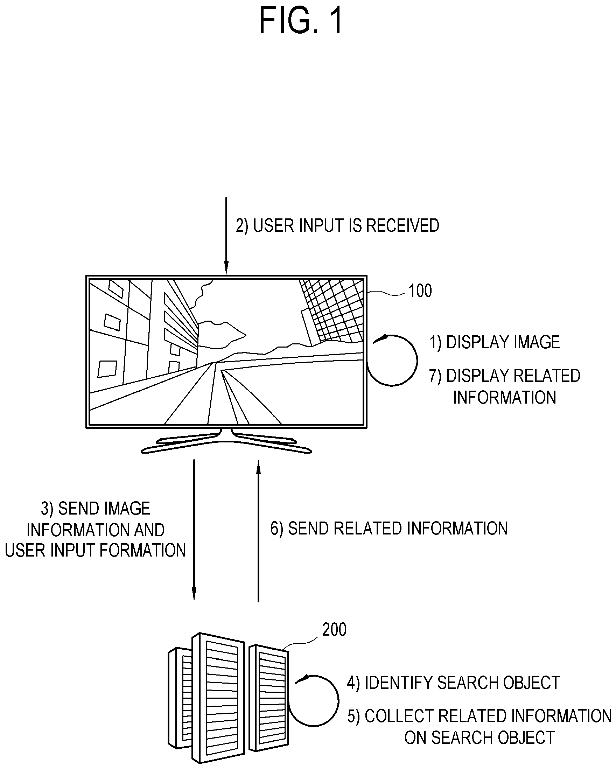

FIG. 1 illustrates a system of a display apparatus 100 and an external apparatus 200 according to an embodiment of the disclosure. The display apparatus 100 is implemented as, for example, a television (TV). Also, the display apparatus 100 is implemented as a device, that is, a smart phone, a tablet PC, a mobile phone, a wearable device such as a smart watch or a head-mounted display, a computer, a multimedia player, an electronic frame, a digital advertisement board, a large format display (LFD), a digital signage, a set-top box, a refrigerator, etc. However, the display apparatus 100 according to an exemplary embodiment of the disclosure is not limited to those devices.

The external apparatus 200 is implemented as, for example, a server. However, the external apparatus 200 is not limited to this. The external apparatus 200 can be any device which is able to receive information from the display apparatus 100, process the information and send the processed information to the display apparatus 100, whatever the name or the form thereof is. Below, an example that the external apparatus is a server 200 will be described.

FIG. 1 is referred to as generally describing operations of the display apparatus 100 and the server 200 where the display apparatus 100 1) displays an image, 2) when a user input is received, and 3) sends image information and user input information to the server 200. As receiving the image information and the user input information from the display apparatus 100, the server 200 4) identifies a search object, 5) collects related information on the search object and 6) sends the collected related information to the display apparatus 100. The display apparatus 100 displays the related information received from the server 200. Each operation will be described in detail below referring to the drawings.

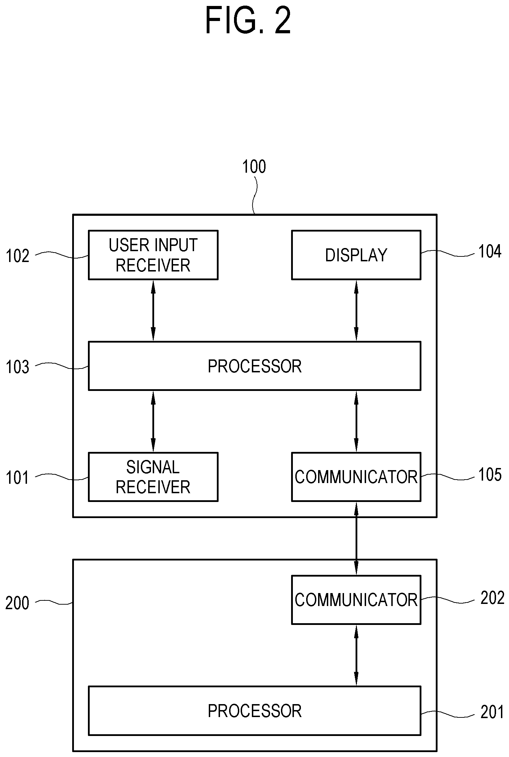

FIG. 2 illustrates a configuration of the display apparatus 100 and the server 200 according to an embodiment of the disclosure. The display apparatus 100 includes a signal receiver 101, a user input receiver 102, a processor 103 and a display 104. However, the configuration of the display apparatus 100 shown in FIG. 2 is merely an example and can be implemented as another configuration. That is, the display apparatus according to an embodiment of the disclosure can be implemented as the configuration shown in FIG. 2 being added with an additional configuration or as the configuration from which a part is excluded.

The signal receiver 101 receives an image signal. The image signal received by the signal receiver 101 can be a wired signal or a wireless signal and be a digital signal or an analog signal. The signal receiver 101 may receive a broadcast signal. The broadcast signal can be a terrestrial signal, a cable signal, a satellite signal or a network signal. Further, the signal receiver 101 receives may include a Wi-Fi communication module for a wireless communication, an ethernet module for a wired connection, a USB port for connection with a USB memory, etc.

The signal receiver 101 may receive a broadcast signal of one of a plurality of channels according to a control of the processor 103. In the broadcast signal is carried a broadcast content which is provided by a broadcast station. The broadcast content includes a broadcast program which is various, for example, drama, movie, news, sport, music, VOD, etc., that is not limited.

The user input receiver 102 receives a user input and sends the user input to the processor 103. The user input receiver 102 can be implemented in a various form according to a type of the user input. For example, the user input receiver 102 can be implemented as a remote control signal receiver which receives a remote control signal of the user input from a remote controller, a menu button which is installed on an outer side of the display apparatus 100, a touch screen which is provided on the display and receives a user touch input, a camera which detects a user gesture input, a microphone which recognizes a user voice input, a keyboard which detects a user key input, etc.

The processor 103 can process an image signal which is received by the signal receiver 101. For example, when the image signal is the broadcast signal, the processor 103 obtains data of the broadcast signal by performing a process which corresponds to a standard of the received broadcast signal.

The kind of the process performed by the processor 103 is not limited. The process performed by the processor 103 can includes, for example, de-multiplexing for dividing an input stream into sub streams of an image and a sound, decoding which corresponds to an image format of the stream, de-interlacing for changing an interlaced stream into a progressive stream, scaling for adjusting the stream to have a predetermined resolution, a noise reduction for image quality enhancement, detail enhancement, frame refresh rate conversion, etc.

The processor 103 may perform a process according to a user input received through the user input receiver 102.

The processor 103 is able to perform a control operation to allow overall configurations of the display apparatus 100 to operate. The processor 103 may include a control program (or an instruction) which allows the control operation to be performed, a non-volatile memory in which the control program is installed, a volatile memory in which the installed control program is loaded to perform the loaded control program. The processor 103 may be implemented as a central processing unit. The control program may be stored in an electronic device other than the display apparatus 100.

The control program may include a basic input/output system (BIOS), a device driver, an operating system, a firmware, a platform, an application program, etc. In an exemplary embodiment of the disclosure, the application program may be in advance installed and stored in the display apparatus 100 in a stage of manufacturing or be installed in the display apparatus 100 by receiving data of the application program from an external device when the display apparatus 100 is used by a user. The data of the application program may be downloaded from, for example, an external server such as an application market but is not limited. Meanwhile, the processor 103 may be implemented in a way of a device, a software module, a circuit, a chip, etc.

The processor 103 can control the user input receiver 102 to receive a user input. The processor 103 can process an image signal and control the display 104 to output the processed image. Although the display apparatus 100 illustrated in FIG. 2 is implemented as a single processor 103 performs the process and the control operation, it is merely an exemplary embodiment of the disclosure and the display apparatus 100 may be implemented to further include an additional processor or a controller other than the processor 103.

The display 104 displays an image processed by the processor 103. The type of the display 104 is not limited but is implemented in various display types such as a liquid crystal, a plasma, a light emitting diode, an organic light-emitting diode (OLED), a surface-conduction electron-emitter, a carbon nano-tube, nano-crystal, etc. The display 104 of the liquid crystal type may include a liquid crystal display panel, a backlight unit for providing light to the liquid crystal display panel, a panel driver for driving the liquid crystal display panel, etc. The display 104 without the backlight unit may include an OLED panel which is a self-emitting light device.

The display apparatus 100 according to an embodiment of the disclosure may further include a communicator 105 or a storage.

The communicator 105 can communicate with an external apparatus, for example, the server 200. The communicator 105 can communicate in a wired or wireless way. Therefore, the communicator 105 can be implemented as various communication types as well as a connector or a terminal for wired connection. For example, the communicator 105 can be configured to communicate based on at least one of Wi-Fi, Bluetooth, Zigbee, Ultra-Wide Band (UWB), Wireless USB, Near Field Communication (NFC), etc. The communicator 105 can include a communication module such as Bluetooth Low Energy (BLE), Serial Port Profile (SPP), Wi-Fi Direct, an infrared communication, Zigbee, Near Field Communication (NFC), etc. The communicator 105 may be implemented in a way of a device, a software module, a circuit, a chip, etc.

The storage can store data according to the process and the control of the processor 103. The storage can be accessed by the processor 103 to perform read, write, change, delete, update, etc. on the data. The storage can include a non-volatile memory such as a flash-memory, a hard-disc drive, a solid-state drive, etc. to preserve data regardless of provision of system power to the display apparatus 100. Also, the storage can include a volatile memory such as a buffer, a RAM, etc. to load data processed by the processor 103 temporarily.

The server 200 according to an embodiment of the disclosure includes a processor 201 and a communicator 202. However, the configuration of the server 200 illustrated in FIG. 2 is an example and can be implemented as another configuration. That is, the server 200 according to an embodiment of the disclosure can be implemented as the configuration shown in FIG. 2 being added with an additional configuration or as the configuration from which a part is excluded. The processor 201 and the communicator 202 will not be described because of similar application with the descriptions of the processor 103 and the communicator 105 in the display apparatus 100.

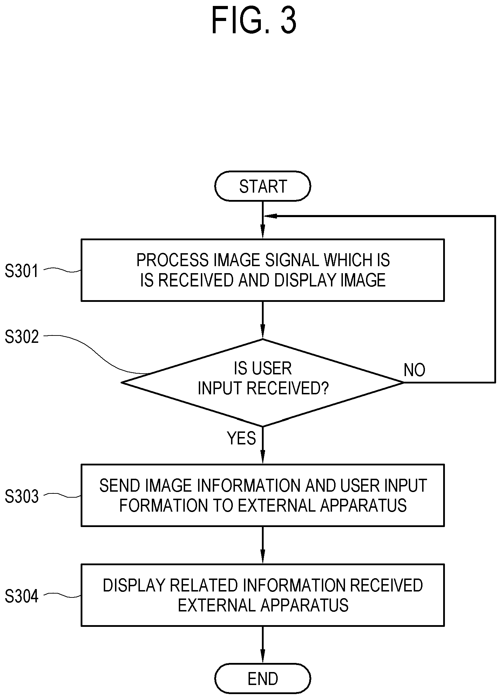

FIG. 3 illustrates a control method of the display apparatus 100 according to an embodiment of the disclosure.

The processor 103 of the display apparatus 100 according to an embodiment of the disclosure processes an image signal which is received through the signal receiver 101 and displays an image on the display 104 (S301).

The processor 103 identifies whether a user input is received through the user input receiver 102 while processing and displaying the image (S302). The user input includes a user input to request to be provided with related information on the image. Here, the related information on the image is any information which is directly or indirectly related with the image where the information can be collected based on the image but is not limited. For example, the related information on the image can be such as a person, an object or a product which appears in a content having the image, an advertisement for the product, a background music, a filming location, a place in the image, etc. Accordingly, the user input to request to be provided with the related information on the image can be a user voice input which is a speech of, for example, who a main character of a drama is, what cloth that the main character is wearing is, what music that is played now is, where the filming location is, etc., while a user is watching the drama on the display apparatus 100. However, the user input to request for the related information is not limited to the described above. Also, the type of the user input is not limited to the voice input. For example, the user input can be input as a touch input, a remote control input, a gesture input, etc.

As the user input is received, the processor 103 sends image information, which includes at least a part of the image, and user input information on the user input to the external apparatus, for example, the server 200 through the communicator 105 (S303). Here, the image information refers to information on the image itself and the type and form of the image information is not limited. For example, the image information is on an image signal received by the signal receiver 101 or an image signal processed by the processor 103. The scope of the image included in the image information is not limited either. For example, if the image is a video, the image information may be a frame of the video, an area of the frame or all of the video.

The user input information is information on the user input itself and the type or format of the user input information is not limited either. For example, if the user input is the voice input, the user input information may be a voice signal, whereas if the user input is a touch input, the user input information may be a coordinate of the touch input. The scope of the user input information is not limited either. For example, if the user input is the voice input, the user input information may be all of the voice input or only a part of the voice input.

As the image information and the user input information are sent to the external apparatus 200, the external apparatus collects and sends the related information based on the image information and the user input information, and the processor 103 displays the received related information (S304).

According to this, because the image information and the user input information are sent and the related information sent by the external apparatus is displayed, the display apparatus 100 can provide the related information even on the image for which a data base has not been made in advance.

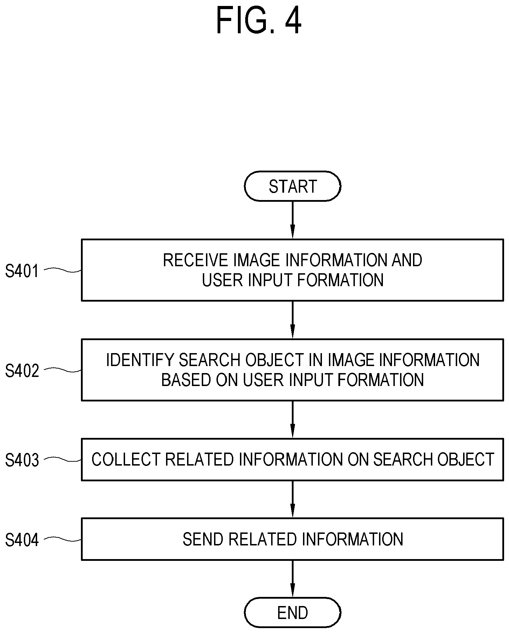

FIG. 4 illustrates a control method of the server 200 according to an embodiment of the disclosure.

The processor 201 of the server 200 receives the image information and the user input information from the display apparatus 100 (S401). The processor 201 identifies a search object in the image information based on the user input information (S402). Here, the search object refers to an object for which a user has requested to be provided with the related information and is a basis of collecting the related information. The search object may be an object which is present in the image or is related to the image although the object is not present in the image. For example, the search object may be a person who appears in a content having the image or an audio which is played with the image.

The processor 201 collects the related information on the search object (S403) . Here, the related information on the search object is any information which is directly or indirectly related with the search object where the information can be collected based on the search object but is not limited. For example, if the search object is a place in the image, the related information on the place can include information on the place itself, a recommended travel site of which atmosphere is similar to the place, a famous restaurant of the travel site, etc.

The processor 201 sends the collected related information to the external apparatus, for example, the display apparatus 100 (S404).

According to this, because the server 200 identifies the search object in the received image information based on the received user input information, collects the related information on the search object and sends the related information to the display apparatus 100, it is possible to provide a user with the related information even on the image for which the related information on the image has not been made in a data base in advance.

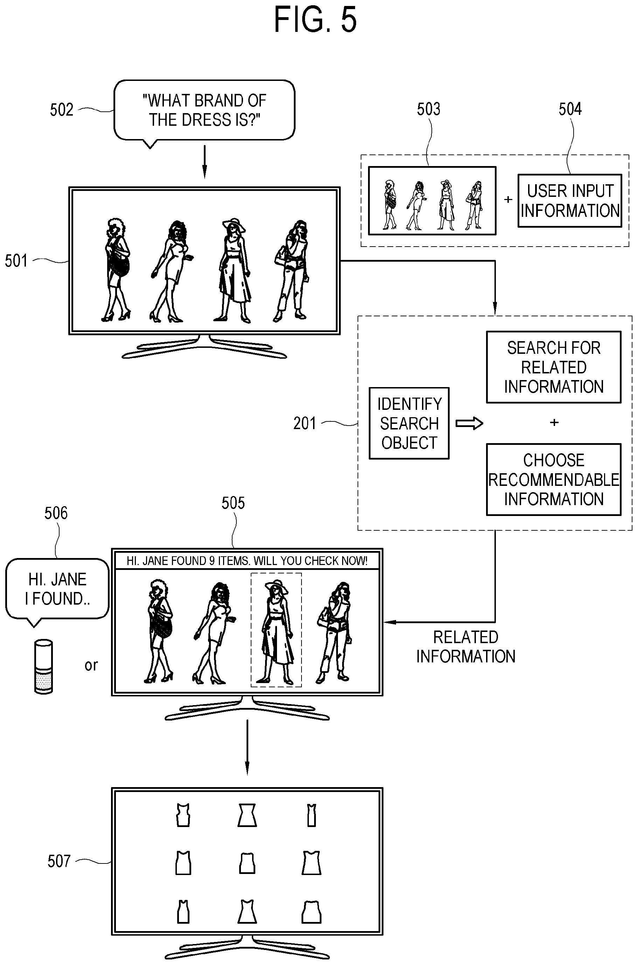

Referring to FIG. 5, operations of the display apparatus 100 and the server 200 will be described in detail.

FIG. 5 illustrates a request for the related information while a user is watching a live broadcast on a TV. For example, if the user is watching a drama on the TV (501), the processor 103 of the display apparatus 100 which is the TV processes an image signal received through the signal receiver 101 and displays an image on the display 104. Here, the user watching the drama can speak a voice input, for example, "what brand of the dress is?" to the TV, if the user wonders about the dress that a heroin is wearing in the drama (502). Because the processor 103 monitors whether a user input is received through the user input receiver 102 while processing and displaying the image, the processor 103 can identify the speech of the user.

As the user input is received while the image is displayed, the processor 103 sends the image information including at least a part of the image and the user input information on the user input to the server 200. FIG. 5 illustrates an example of sending a captured screen 503 where the image that is displayed when the user voice input is spoken is captured to the server 200. FIG. 5 illustrates an example of sending the user voice input as the user input information to the server 200. However, the image information and the user input information are not limited.

As the captured screen 503 and the user voice input 504 are received from the display apparatus 100, the processor 201 of the server 200 identifies the search object in the image information based on the user input information. As an example of identifying the search object in the image information based on the user input information, the processor 201 obtains a keyword from the user input information and identifies the search object which corresponds to the keyword in the image information. For example, the processor 201 can obtain a keyword of "dress" from the voice input of "what brand of the dress is?". Identifying the keyword by recognizing the voice input can be implemented by using, for example, a voice recognition based on Dynamic Time Warping (DTW), Hidden Markov Model (HMM), a Rule-based approach, a deep learning of Deep Neural Network (DNN), etc.

As the keyword of "dress" is obtained from the user input information, the processor 201 identifies the search object to be an object which is recognized as the dress in the captured screen 503. Identifying the search object by recognizing an object which corresponds to the user input information or the keyword in the image information can be implemented by using, for example, a machine learning of a Support Vector Machin (SVM) algorithm, a deep learning of Convolutional Neural Network (CNN), etc. However, the implementation is not limited but can use various image/object recognition techniques. Referring to FIG. 5, because the object which corresponds to the dress in the captured screen 503 is a black dress that a heroin the second from the right is wearing, the processor 201 can identifies the black dress as the search object.

As the search object is identified, the processor 201 collects the related information on the search object. Because the search object in FIG. 5 is the black dress that the heroin the second from the right is wearing, the related information on the search object can include a list of dress products which are the same as or similar to the dress in color and style. Searching for the related information having an image which is the same as or similar to the image corresponding to the search object can be implemented by using, for example, a high speed similar vector search based on a feature vector clustering. However, the implementation is not limited. A source of information where the related information on the search object is collected is not limited either. That is, the processor 201 may collect the related information from a public network such the Internet or a data base which has been made in advance.

If an amount of the related information which has been found is large, the processor 201 can allow a user to choose a recommendable portion of the found related information. The choice can be done randomly or in a defined way. In case of latter, a reference such as personal information of the user, a search history, etc. can be used.

As the related information is collected as above, the processor 201 of the server 200 sends the related information to the display apparatus 100.

As the related information is received from the server 200, the processor 103 of the display apparatus 100 displays the related information on the display 104. The processor 103 may display the related information 507 on the display 104 upon the related information being received or, as illustrated in FIG. 5, after displaying a notice 505 that the related information has been received and then receiving an additional user input to request for display of the related information. The notice that the related information has been received can be in a form of an audio output of the display apparatus 100 or an audio output 506 of an additional speaker.

According to the embodiment of the disclosure, in response to a user input to request for the related information on the image, it is possible to provide the related information on the image considering the intention of the user and to provide the related information even on the image for which the related information has not been made in a data base in advance.

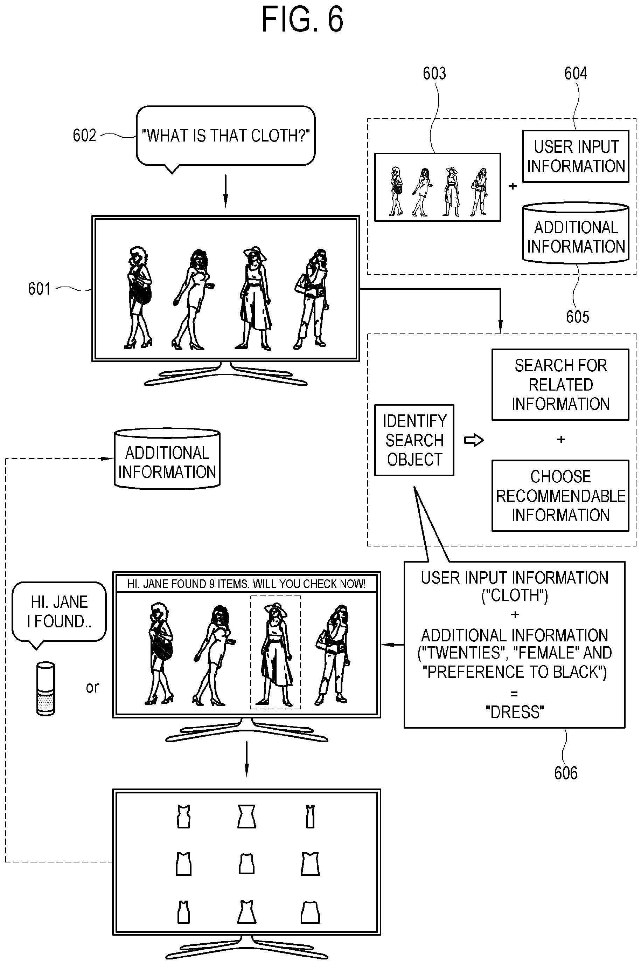

FIG. 6 illustrates an example of operations of the display apparatus 100 and the server 200 according to a second embodiment of the disclosure.

The display apparatus 100 may further sends additional information to the server 200 as well as the image information and the user input information. Here, the additional information can include personal information on the user, content information on a content of the image, circumstance information on watching environment, etc. The personal information on the user is information on an individual user to identify the user or a preference of the user, for example, an age of the user, a sex, an address, an interest, a taste, etc. The content information on the content of the image can include a title of the content, a type or kind, genre, a broadcaster, broadcast time, etc. The circumstance information on the watching environment is comprehensive information which is related to the watching situation or environment of the image other than the information on the content itself, for example, a watching time, ambient light when watching, ambient noise, a number of users watching the image, etc.

An example of using the additional information will be described in detail referring to FIG. 6. As the user speaks a voice input of "what is that cloth?" while watching a drama 601 on the TV (602), the processor 103 identifies the speech of the user upon the user input being received through the user input receiver 102 while processing and displaying the image.

As the user input is identified, the processor 103 sends the additional information 605 to the server 200 together with the image information 603 including at least a part of the image and the user input information 604 on the user input. FIG. 6 illustrates an example of sending information of "twenties", "female" and "preference to black" as the additional information 605 on the user.

The server 200 can use the additional information 605 to identify the search object. That is, the processor 201 of the server 200 can identify the search object in the image information based on the user input information and the additional information. For example, supposing that the processor 201 obtains a keyword of "cloth" from the voice input of "what is that cloth?" as the user input information to identify the search object in the captured screen 603 as the image information based on the keyword, it might be difficult for the processor 201 to identify what the cloth that the user intends to know about is or which cloth to be the search object because there are clothes that four people are wearing in the captured screen 603. Here, the processor 201 can identify the black dress that a heroin the second from the right is wearing among the clothes in the image information by referring to the additional information of "twenties", "female" and "preference to black" as well as the keyword of "cloth" obtained from the user input information (606).

The server 200 can also use the additional information 605 to collect the related information on the search object. For example, if the search object is identified as the black dress that the heroin the second from the right is wearing in the captured screen 603, unlike the related information being immediately searched for in an example of FIG. 5, it is possible to further consider the additional information to search for the related information in an example of FIG. 6. For example, in searching for a dress product which is the same as or similar to the dress in color and style, it is possible to further consider the preference of the user referring to the dress that the user has been wearing or a user history of searching dresses, to search for only a dress appropriate to the current season, or to search for another cloth that the heroin is wearing in an advertisement. However, searching for the related information further considering the additional information is not limited to the example.

The description described in FIG. 5 can be applied to send the related information collected as above to the display apparatus 100 to display the related information.

According to this, it is possible to provide the related information which is appropriate to the intention of the user.

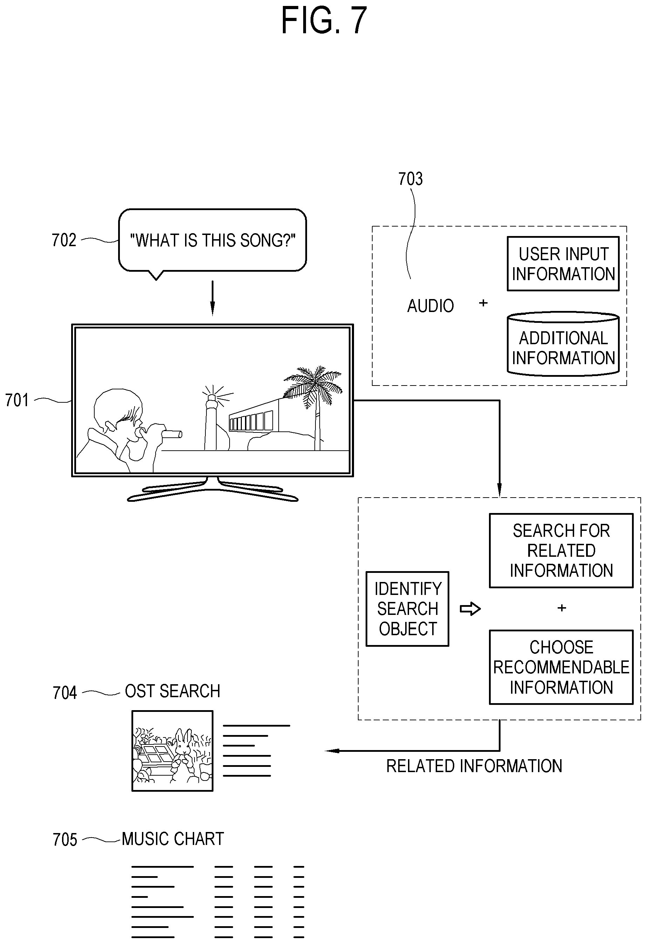

FIG. 7 illustrates an example of operations of the display apparatus 100 and the server 200 according to a third embodiment of the disclosure. The image information according to the embodiment may be at least a part of an audio obtained by processing an audio signal or include audio information in addition to the captured screen of the image as described above.

As illustrated in FIG. 7, if a user speaks a voice input of "what is this song?" while watching a drama 701 on the TV (702), the processor 103 can identify the speech of the user because the processor 103 monitors whether the user input is received through the user input receiver 102 while processing and displaying the image.

Here, unlike the embodiments of FIGS. 5 and 6, the processor 103 identifies that the voice input of the user is about a song and sends as the image information the audio information 703 including a part of an audio which is played when the voice input is received to the server 200. Alternatively, the processor 103 may send the audio information 703 to the server 200 together with the captured screen as described in FIGS. 5 and 6.

Then, the processor 201 of the server 200 can identify which song corresponds to the audio information 703 by determining the audio information 703 as the search object based on the user input information, search for the related information based on this, and collect the related information which includes information, for example, in which album the song is contained (704), on which music chart the song is nominated (705), etc.

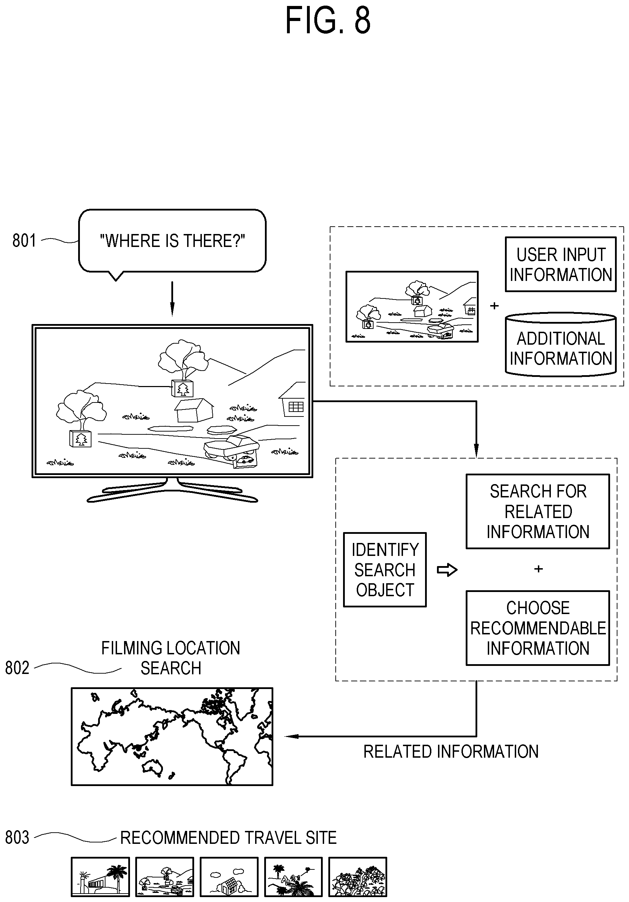

FIG. 8 illustrates an example of operations of the display apparatus 100 and the server 200 according to a fourth embodiment of the disclosure. The embodiment is on an example of a user request for information on a background place of the image. In comparison with the embodiments of FIGS. 5 through 7, the embodiment is different in that the user input information is on a place (801) and that the collected related information can include information on where the place is (802), where a travel site which has a scenery or a geographical feature similar to the place is (803), etc. However, otherwise, the descriptions of the previous embodiments can be generally applied to this embodiment.

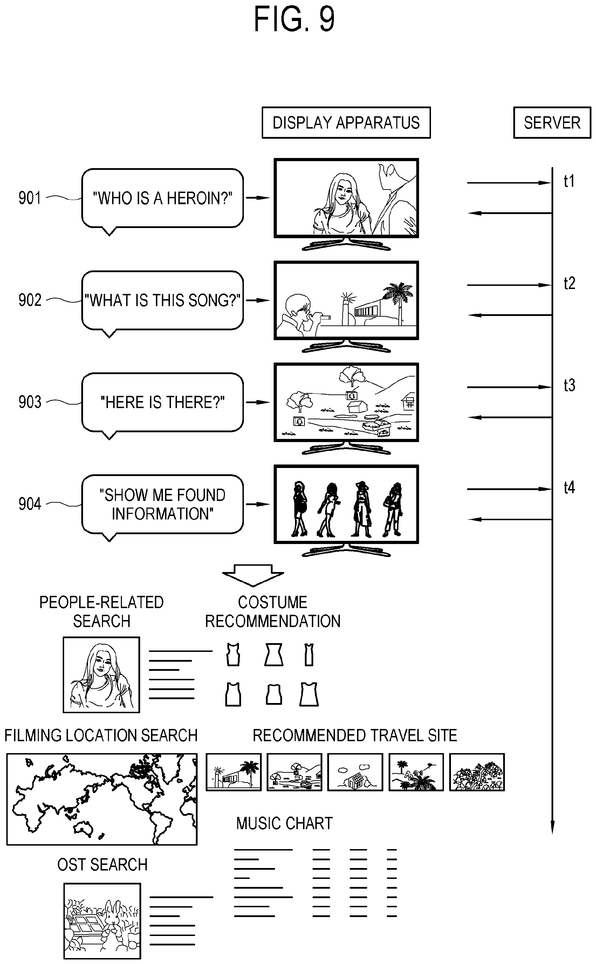

Meanwhile, although the previous embodiments have been described as when the user input to request the related information is identified is close to when the related information is displayed and provided, the embodiment of the disclosure is not limited. That is, whether the user input to request the related information is received may be identified at any time regardless of when the related information is displayed and provided, where a plurality of requests may be received to display at once the related information which is collected on each request. An example of the latter will be described referring to FIG. 9. FIG. 9 illustrates an example of operations of the display apparatus 100 and the server 200 according to a fifth embodiment of the disclosure.

The display apparatus 100 according to the embodiment of the disclosure may further include a storage, where the processor 103 can store in the storage a first related information which is received from the external apparatus based on a first user input and display the stored first related information when a second user input is received.

For example, if a user speaks a voice input of "who is a heroin?" at a time t1 while watching a drama on the TV (901), the processor 103 sends the image information and the user input information to the server 200 to identify the search object and collect the related information, and receives the related information. Here, because the display apparatus 100 further includes the storage, it is possible to store the received related information in the storage before displaying the related information.

The above description can be similarly applied to when a user speaks voice inputs of "what is this song?" at a time t2 (902) and then "where is there?" at a time t3 (903).

Then, if a user speaks a voice input of "show me found information" at a time t4, the processor 103 can display the related information which has been stored to this time. However, the word of the user voice input to request displaying of the related information is not limited.

According to this, it is possible to differentiate when the user input to request the related information is identified from when the collected related information is displayed and provided, where, furthermore, because a plurality of requests may be received to display at once the related information which is collected on each request, it is possible to provide the related information in more various ways.

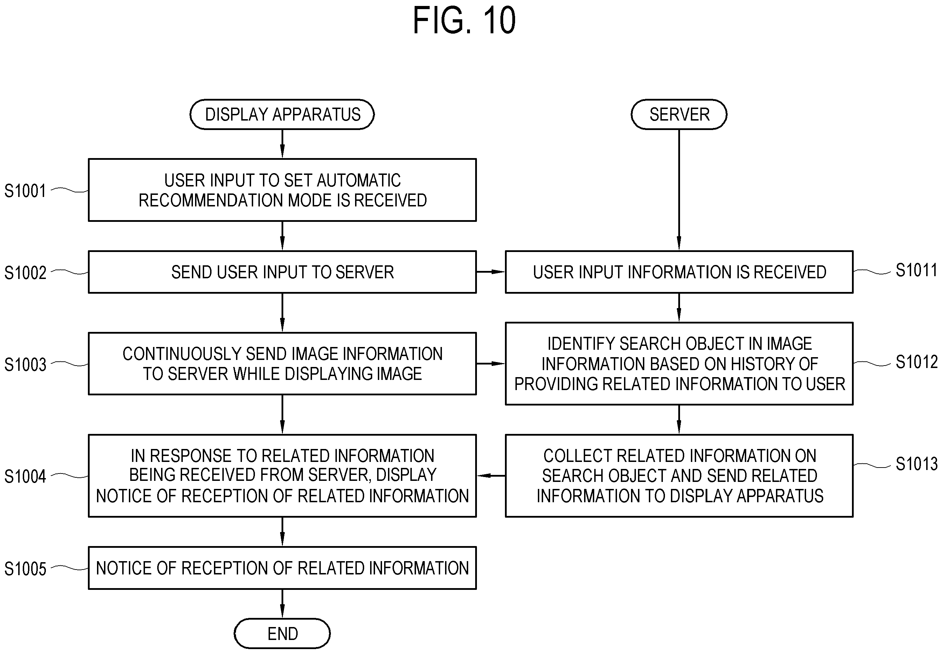

FIG. 10 illustrates an example of operations of the display apparatus 100 and the server 200 according to a sixth embodiment of the disclosure. According to the embodiment of the disclosure, it is possible to provide the related information on the image based on a history of providing the related information to a user without a user request for the related information.

The embodiment is on, so called, an automatic recommendation mode which can begin by receiving a user input to set the mode. However, the begin of the mode is not limited but can be set as a default.

As a user input to set the automatic recommendation mode is received (S1001), the processor 103 sends the user input to the server 200 (S1002) and then continuously sends the image information to the server 200 while displaying the image (S1003). Meanwhile, as the user input to set the automatic recommendation mode is received (S1011), the processor 201 of the server 200 identifies the search object in the image information based on the history of providing the related information to the user (S1012). As the search object is identified, the processor 201 of the server 200 collects the related information on the search object and sends the related information to the display apparatus 100 (S1013). As the related information is received from the server 200, the processor 103 of the display apparatus 100 displays a notice of reception of the related information (S1004). According to this, it is possible for a user to know that the related information is automatically collected. As a user input to request displaying of the related information is received, the processor 103 displays the received related information. However, the notice and display of the related information is not limited but may be set as, for example, the related information is displayed immediately without providing the notice in the automatic recommendation mode.

According to this, although a user does not input to request the related information, it is possible to automatically provide the related information based on the history of providing the related information to the user.

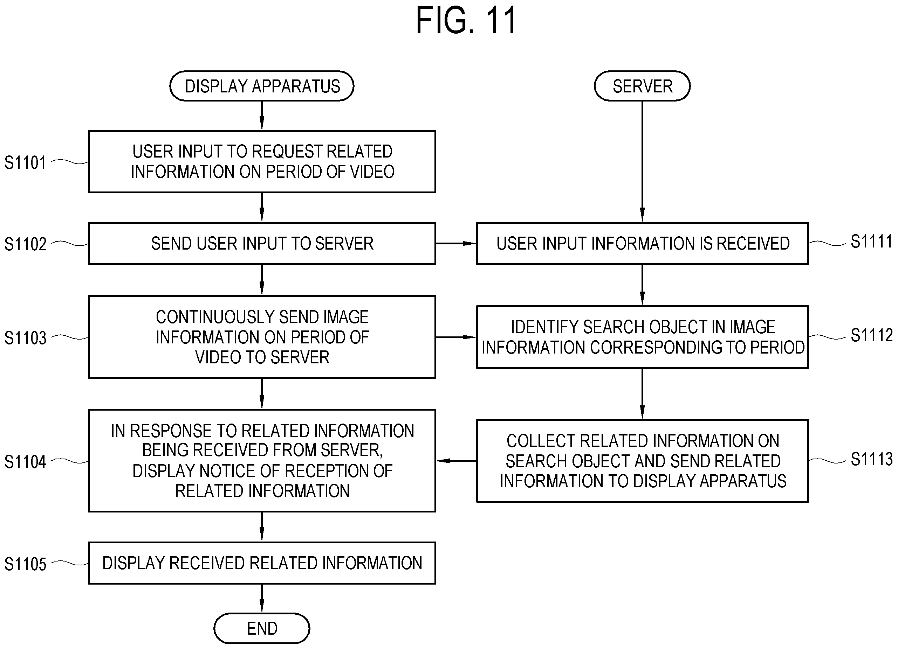

FIG. 11 illustrates an example of operations of the display apparatus 100 and the server 200 according to a seventh embodiment of the disclosure. According to the embodiment, it is possible to continuously the related information in a same type even receiving a single user input on a period of a video.

As a user input to request the related information on a period of a video is received (S1101), the processor 103 sends the user input to the server 200 (S1102), and then continuously sends the image information on the period of the video to the server 200 while displaying the image (S1103). Here, the user input to request the related information on the period of the video includes user inputs to designate the period as well as the request for the related information such as "let me know if a pretty dress is shown in the drama watched now."

As the user input to request the related information on the period of the video (S1111), the processor 201 of the server 200 identifies the search object in the image information of the period (S1112). As the search object is identified, the processor 201 of the server 200 collects the related information on the search object and sends the related information to the display apparatus 100 (S1113). As the related information is received from the server 200, the processor 103 of the display apparatus 100 displays a notice of reception of the related information (S1104). According to this, it is possible for a user to know that the related information is automatically collected. As a user input to request displaying of the related information is received, the processor 103 displays the received related information. However, the notice and display of the related information is not limited but may be set as, for example, the related information is displayed immediately without providing the notice.

According to this, even with a single user input for a period of a video, it is possible to continuously the related information in a same type, thereby enhancing user convenience.

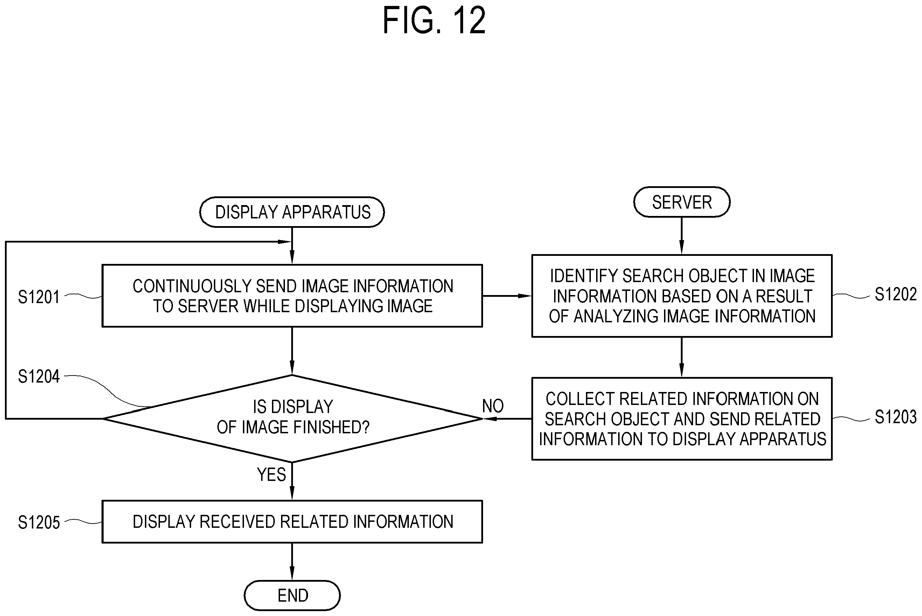

FIG. 12 illustrates an example of operations of the display apparatus 100 and the server 200 according to an eighth embodiment of the disclosure. In the embodiment of the automatic recommendation mode, an example of providing the related information without a user input has been described referring to FIG. 10. However, in the embodiment the related information is provided based on the history of providing the related information to the user.

However, providing the related information in the automatic recommendation mode is not limited to providing based on the history of providing the related information to the user. It is possible to provide the related information without a user input in various ways.

In the embodiment illustrated in FIG. 12, it is possible to provide the related information by analyzing the image and identifying the search object though a user input is not received.

According to the embodiment, the processor 103 of the display apparatus 100 continuously sends the image information to the server 200 while processing the received image signal and displaying the image (S1201). For example, the processor 103 can sends the image information to the server 200 at regular intervals. Alternatively, the processor 103 can identify each scene of the image signal using a scene detection and send the image information to the server 200 for each scene. However, continuous sending of the image information to the server 200 is not limited.

Meanwhile, as the image information is received from the display apparatus 100, the server 200 identifies the search object in the image information based on a result of analyzing the image information (S1202), collects the related information on the search object and sends the related information to the display apparatus 100 (S1203). Here, because there is not the user input information to specify the search object, the processor 201 of the server 200 can identify objects which are recognizable from the image information as the search object and provide the related information on the objects. For example, the processor 201 can recognize a person in the image, an object, a product, a background, a place, a music played with the image, etc. to identify the search object, and send the related information to the display apparatus 100 on, for example, a main character profile, product information, filming location information, related travel information, background music information, etc. If there are many kinds of the related information to be sent, the processor 201 of the server 200 can categorize and/or rank the related information in the kinds. Here, the categorization and/or ranking of the related information may be performed by the processor 103 of the display apparatus 100.

As the related information is received from the server 200, the processor 103 of the display apparatus 100 displays the received related information (S1205). In displaying the received related information, the processor 103 may display the related information according to a user input after displaying a notice of reception of the related information as described in the FIGS. 10 and 11. Alternatively, as illustrated in FIG. 12, the processor 103 can identify whether the display of the image is finished (S1204), and if finished, display the received related information (S1205). Meanwhile, in displaying the received related information, the processor 103 may display all of the received related information or selectively display a part of the received related information based on personal information of the user.

According to this, although a user does not input to request the related information, it is possible to automatically provide the related information.

Meanwhile, with regard to processing between the processor 103 of the display apparatus 100 and the processor 201 of the server 200, the processor 103 of the display apparatus 100 may perform a part of a process of the processor 201 of the server 200. For example, the processor 103 of the display apparatus 100 may perform obtaining of the keyword from the user input information, or identifying of the search object in the image information based on the user input information. Further, the processor 103 of the display apparatus 100 may perform all the process of the processor 201 of the server 200. In this case, it may be omitted that the image information and the user input information are sent from the display apparatus 100 to the server 200 or the communicator may be omitted from the display apparatus 100 because the display apparatus 100 does not need to receive the related information from the server 200.

Although the disclosure has been described by the limited embodiments and drawings, various modifications and changes can be made from the foregoing descriptions by a person having an ordinary skill in the art. For example, proper results are achieved even though the described features are carried out in order different from that of the foregoing method, or the elements of the described system, structure, apparatus, circuit, etc. may be coupled or assembled in a form different from that of the foregoing method, or may be replaced or substituted by other elements or equivalents. Accordingly, the disclosure is not restricted by the foregoing embodiments and accompanying drawings, but involves other actualizations, embodiments, appended claims and equivalents, and the methods of the disclosure are taken into account for not restrictive but illustrative purpose.

## Claims

1. A display apparatus comprising:
a display;
a signal receiver;
a user input receiver;
a communicator; and
a processor configured to:
process an image signal received through the signal receiver and control the display to display an image,
with a user input being received through the user input receiver while displaying the image, send image information including at least a part of the image and user input information on the user input to an external apparatus through the communicator, and
control the display to display related information which is based on the image information and the user input information and is received from the external apparatus.

2. The display apparatus according to claim 1, wherein the processor is further configured to send to the external apparatus additional information which includes at least one of personal information on a user, content information on a content of the image or circumstance information on watching environment.

3. The display apparatus according to claim 1, wherein the signal receiver further receives an audio signal, and
the image information includes at least a part of an audio which is obtained by processing the audio signal.

4. The display apparatus according to claim 1, further comprising a storage,
wherein the processor is further configured to:
store in the storage first related information which is based on a first user input and is received from the external apparatus, and
with a second user input being received, control the display to display the stored first related information.

5. A server comprising:
a communicator; and
a processor configured to:
receive image information and user input information from an external apparatus,
identify a search object in the image information based on the user input information, and
collect related information on the search object and send the related information to the external apparatus.

6. The server according to claim 5, wherein the processor is further configured to:
obtain a keyword from the user input information, and
identify the search object corresponding to the keyword in the image information.

7. The server according to claim 5, wherein the processor is further configured to:
receive additional information which includes at least one of personal information on a user, content information on a content of an image or circumstance information on watching environment, and
identify the search object in the image information based on the user input information and the additional information.

8. The server according to claim 5, wherein the processor is further configured to:
receive additional information which includes at least one of personal information on a user, content information on a content of an image or circumstance information on watching environment, and
collect the related information on the search object based on the additional information.

9. The server according to claim 5, wherein the processor is further configured to, with a user input to set an automatic recommendation mode being received, identify the search object in the image information based on a history of providing the related information to a user.

10. The server according to claim 5, wherein the processor is further configured to, with a user input to request the related information on a period of a video being received, identify the search object in the image information corresponding to the period.

11. A display apparatus comprising:
a display;
a signal receiver;
a user input receiver; and
a processor configured to:
process an image signal received through the signal receiver and control the display to display an image,
with a user input being received through the user input receiver while displaying the image, identify a search object in image information including at least a part of the image based on the user input,
collect related information on the search object, and
control the display to display the related information.

12. A method of controlling a display apparatus, the method comprising:
receiving an image signal;
processing the received image signal and displaying an image;
with a user input being received while displaying the image, sending image information including at least a part of the image and user input information on the user input to an external apparatus; and
displaying related information which is based on the image information and the user input information and is received from the external apparatus.

13. The method according to claim 12, wherein the sending comprises further sending to the external apparatus additional information which includes at least one of personal information on a user, content information on a content of the image or circumstance information on watching environment.

14. The method according to claim 12, wherein the receiving comprises further receiving an audio signal, and
the image information includes at least a part of an audio which is obtained by processing the audio signal.

15. The method according to claim 12, wherein the displaying comprises:
storing first related information which is based on a first user input and is received from the external apparatus, and
with a second user input being received, displaying the stored first related information.
